# EUROPEAN PATENT APPLICATION

(11) **EP 3 166 062 A1**
(43) Date of publication of application: **10.05.2017**
(21) Application number: 16197830.9
(22) Date of filing: 08.11.2016
(51) Int. Cl.: G06Q 20/20

(54) **ACCOUNTING APPARATUS**

(30) Priority: 09.11.2015 JP 2015219686
(71) Applicant: Toshiba TEC Kabushiki Kaisha, Tokyo 141-0032 (JP)
(72) Inventor: SUSAKI, Akiko, Shinagawa-ku, Tokyo 141-8562 (JP); GOTANDA, Tsuyoshi, Shinagawa-ku, Tokyo 141-8562 (JP); SHISHIDO, Norifumi, Shinagawa-ku, Tokyo 141-8562 (JP)
(74) Representative: Takeuchi, Maya

(57) **Abstract**

An accounting apparatus includes a case body provided with a processing section that executes an accounting processing based on a commodity information of a commodity sales of which is registered by a registration section, a light emitting unit provided above the case body, an information display unit arranged in a connection manner with the light emitting unit, a detection section configured to detect that the processing section is in an error state, a light emitting section configured to control the light emitting unit to emit light in a form indicating the error state on a condition that the detection section detects that the processing unit is in the error state, and an information display section configured to display content of the error detected by the detection section on the information display unit so that the content of the error is visually recognized.

## Description

### FIELD

Embodiments described herein relate generally to an accounting apparatus, a system for accounting processing and a check-out system using such an accounting apparatus or a system for accounting processing. a system for accounting processing

### BACKGROUND

Conventionally, a semi-self-checkout system including a registration apparatus on which an operator performs a registration operation for inputting information of a sales article such as a commodity and an accounting apparatus on which a customer performs an accounting operation based on the registered information of the sales article is known. Further, a self-checkout system, including functions of the aforementioned registration apparatus and the accounting apparatus, which is composed of an accounting apparatus on which a customer performs the registration operation and the accounting operation is also known.

In such checkout apparatuses described above, if an error occurs in a change machine or a printer built in the accounting apparatus, for example, a light emitting unit provided in the accounting apparatus emits light to inform an operator of the occurrence of the error in the accounting apparatus. The operator comes to the accounting apparatus that informs the error to address the error.

However, according to the conventional checkout system or the accounting apparatus, the operator cannot recognize the content of the error until the operator executes an error release processing on the accounting apparatus that informs the error. Therefore, an error recovery work by the operator takes time in some cases.

To solve such problems, there is provided an accounting apparatus comprising:
a case body provided with a processing section that executes an accounting processing based on a commodity information of a commodity, sales of which is registered by a registration section;
a light emitting unit provided above the case body;
an information display unit arranged in a connection manner with the light emitting unit;
a detection section configured to detect that the processing section is in an error state;
a light emitting section configured to control the light emitting unit to emit light in a form indicating the error state on a condition that the detection section detects that the processing unit is in the error state; and
an information display section configured to display content of the error detected by the detection section on the information display unit so that the content of the error is visually recognized.

Preferably, the information display section displays a number for specifying the accounting apparatus in which the error occurs along with the content of the error on the information display unit.

Preferably still, the detection section further detects that the processing unit is in a caution state, and the information display section displays content of the caution state detected by the detection section on the information display unit so that the content of the caution state is visually recognized.

Preferably yet, the light emitting section controls the light emitting unit to emit light with a color indicating that the processing unit is in the error state, and the information display section displays the content of the error on a background a color of which is the same as that of the light emitted by the light emitting unit.

Suitably, the light emitting section controls the light emitting unit to emit light in a form different from that in the error state on a condition that the detection section detects the caution state.

The invention also relates to a system for accounting processing, comprising:
a case body means provided with a processing means that executes an accounting processing based on a commodity information of a commodity, sales of which is registered by a registration means;
a light emitting means provided above the case body means ;
an information display means arranged in a connection manner with the light emitting unit;
a detection means configured to detect that the processing means is in an error state;
a light emitting means configured to control the light emitting means to emit light in a form indicating the error state on a condition that the detection means detects that the processing means is in the error state; and
an information display means configured to display content of the error detected by the detection means on the information display means so that the content of the error is visually recognized.

Preferably, the information display means displays a number for specifying the system for accounting in which the error occurs along with the content of the error on the information display means.

Preferably still, the detection means further detects that the processing means is in a caution state, and the information display means displays content of the caution state detected by the detection means on the information display means so that the content of the caution state is visually recognized.

Preferably yet, the light emitting means controls the light emitting unit to emit light with a color indicating that the processing means is in the error state, and the information display means displays the content of the error on a background a color of which is the same as that of the light emitted by the light emitting unit.

Typically, the light emitting means controls the light emitting unit to emit light in a form different from that in the error state on a condition that the detection means detects the caution state.

The invention also relates to a check-out system including at least one accounting apparatus as defined above or at least one system for accounting processing as defined above, and a registration apparatus.

### DESCRIPTION OF THE DRAWINGS

The above and other objects, features and advantages of the present invention will be made apparent from the following description of the preferred embodiments, give as non-limiting examples, with reference the accompanying drawings, in which:
FIG. 1 is a diagram schematically illustrating an entire checkout system according to a first embodiment;
FIG. 2 is a perspective view illustrating an appearance of a registration apparatus;
FIG. 3 is a perspective view illustrating an appearance of an accounting apparatus;
FIG. 4 is a block diagram illustrating a hardware configuration of the registration apparatus and the accounting apparatus;
FIG. 5 is a flowchart illustrating flow of a control processing performed by the registration apparatus;
FIG. 6 is a diagram illustrating an example of a screen for operator in the registration apparatus;
FIG. 7 is a diagram illustrating an example of a screen for customer in the registration apparatus;
FIG. 8 is a functional block diagram illustrating a functional configuration of the accounting apparatus;
FIG. 9 is a flowchart illustrating a flow of the control processing performed in the accounting apparatus;
FIG. 10 is a diagram illustrating an example of a light emitting unit and a display of an information display unit in a normal state of the accounting apparatus;
FIG. 11 is a diagram illustrating an example of the light emitting unit and a display of the information display unit in a caution state of the accounting apparatus;
FIG. 12 is a diagram illustrating an example of the light emitting unit and a display of the information display unit in an error state of the accounting apparatus;
FIG. 13 is a perspective view illustrating an appearance of an accounting apparatus according to a second embodiment.
FIG. 14 is a block diagram illustrating a hardware configuration of the accounting apparatus;
FIG. 15 is a flowchart illustrating flow of a control processing performed by a registration unit; and
FIG. 16 is a flowchart illustrating flow of the control processing performed by an accounting unit.

### DETAILED DESCRIPTION

According to an embodiment, an accounting apparatus includes a case body provided with a processing section that executes an accounting processing based on a commodity information of a commodity sales of which is registered by a registration section, a light emitting unit provided above the case body, an information display unit arranged in a connection manner with the light emitting unit, a detection section configured to detect that the processing section is in an error state, a light emitting section configured to control the light emitting unit to emit light in a form indicating the error state on a condition that the detection section detects that the processing unit is in the error state, and an information display section configured to display content of the error detected by the detection section on the information display unit so that the content of the error is visually recognized.

### (First Embodiment)

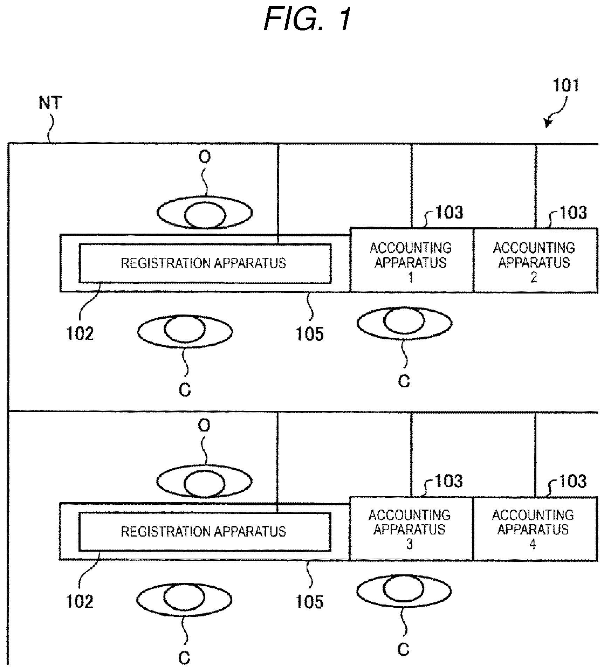

Hereinafter, an accounting apparatus according to a first embodiment is described in detail with reference to the accompanying drawings FIGS. 1 to 12. In the first embodiment, an accounting apparatus in a checkout system including a registration apparatus (registration unit) operated by an operator and an accounting apparatus operated by a customer is described as an example. In the first embodiment, description is made on a commodity as an example the sales article. The invention is not limited by the embodiments described below.

FIG. 1 is a diagram schematically illustrating an entire checkout system 101 according to the first embodiment. As illustrated in FIG. 1, the checkout system 101 includes registration apparatuses 102 operated by operators O, i.e., store clerk, and accounting apparatuses 103 operated by customers C themselves.

The registration apparatuses 102 are respectively installed on work tables 105 formed in a horizontally elongated shape. Each registration apparatus 102 and each accounting apparatus 103 are electrically connected to each other with a network NT such as a Local Area Network (LAN).

In the embodiment illustrated in FIG. 1, two accounting apparatuses 103, i.e., an accounting apparatus 1 and an accounting apparatus 2, are connected to one of the registration apparatuses 102. Also, two accounting apparatuses 103, i.e., an accounting apparatus 3 and an accounting apparatus 4, are connected to another registration apparatus 102. The accounting apparatus 1, the accounting apparatus 2, the accounting apparatus 3, and the accounting apparatus 4 are respectively provided with the same structure and functions. The respective accounting apparatuses 103 are linearly installed so as to be adjacent to the work table 105. Therefore, in the present embodiment, a path for customer C is formed between the plurality of work tables 105.

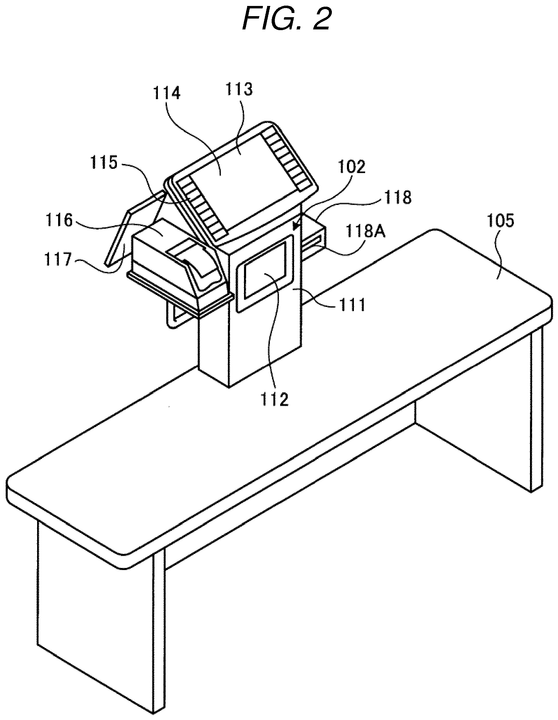

First, the registration apparatus 102 operated by an operator O is described. FIG. 2 is a perspective view illustrating an appearance of the registration apparatus 102. As illustrated in FIG. 2, the registration apparatus 102 installed on an upper surface of the work table 105 is composed of an upright scanner 111 with a reading window 112 as a base component. The scanner 111 reads a commodity code (sales article code) from a captured code symbol, using a general object recognition technique described below, for example. The scanner 111 may be a scanner that reads a commodity code encoded in a code symbol by analyzing a laser beam received by scanning the code symbol attached to the commodity.

As for the general object recognition, a recognition technique is described in the following literature:
Keiji Yanai, "The Current State and Future Directions on Generic Object Recognition", Journal of Information Processing Society of Japan, Vol. 48, No. SIG16 [searched on January 6, 2014], Internet <URL: http://mm.cs.uec.ac.jp/IPSJ-TCVIM-Yanai.pdf>

The registration apparatus 102 includes a display 114 provided with a touch panel 113 and an operation unit 115 on the scanner 111. The display 114 displays a commodity name, a price, and the like of a commodity captured by an image capturing unit of the scanner 111. The touch panel 113 and the operation unit 115 are for assisting an input of commodity information (sales article information).

A printer 116 is provided at the left side of the registration apparatus 102 when viewed from the side of the operator O. The printer 116 issues a slip on which a barcode in which a transaction number for identifying a transaction is symbolized is printed.

A card reader 118 is provided at the right side of the registration apparatus 102 when viewed from the side of the operator O. The card reader 118 magnetically reads/writes information on a credit card (not illustrated) inserted from an insertion slot 118A. The credit card is carried by a customer C to magnetically store a customer code for specifying the customer C and accumulated points.

A display 117 for customer C is provided at the left side of the registration apparatus 102 when viewed from the side of the operator O.

The registration apparatus 102 reads a code such as a barcode or a QR code (registered trademark) attached to a commodity to specify the commodity based on the commodity code included in the code.

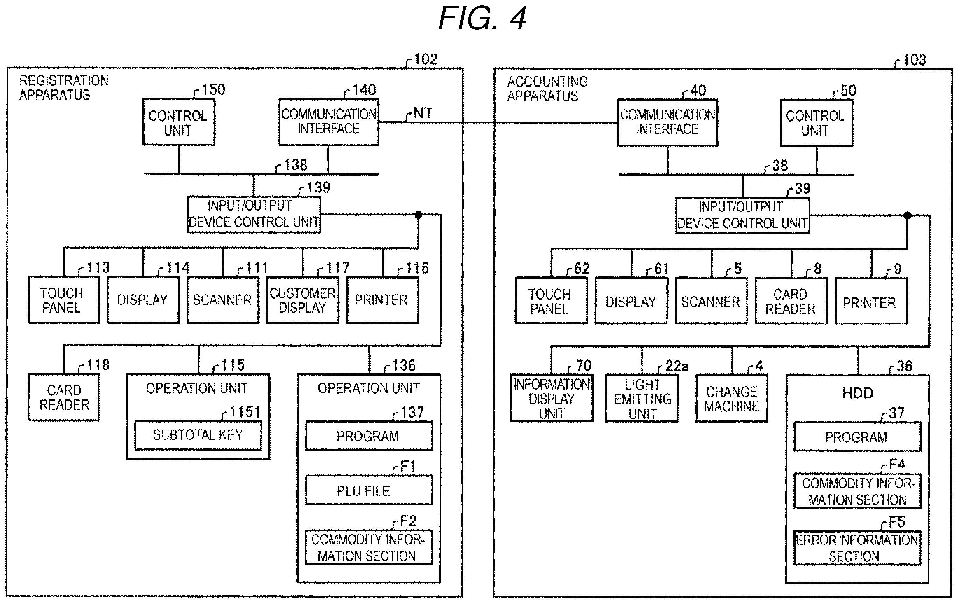

Next, the registration apparatus 102 displays a screen for confirming the specified commodity and receiving an input of a quantity or the like on the display 114. Then, the registration apparatus 102 reads a commodity information such as a commodity classification, a commodity code, a commodity name, a unit price, and the like corresponding to the commodity code from a PLU file F1 (see FIG. 4) based on the information of the input commodity code of the commodity, the input quantity, and the like, to store the commodity information in a commodity information section F2 (see FIG. 4) described later.

In such a registration apparatus 102, if the customer C places a basket in which a commodity to be purchased is put at the right side of the work table 105 in FIG. 2, the operator O takes out the commodity from the basket and holds a commodity code attached to the commodity in front of the reading window 112. Then, the scanner 111 reads the commodity code. The registration apparatus 102 reads commodity information based on the read commodity code and executes a sales registration processing for storing the commodity information in the commodity information section F2. The sales registration processing is referred to a processing of displaying and storing commodity information such as a name and a price of the commodity based on the input commodity code.

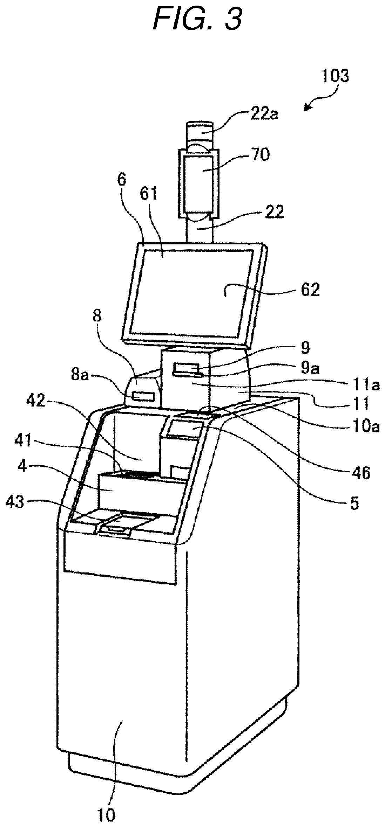

Next, the accounting apparatus 103 on which the customer C carries out an accounting processing is described. FIG. 3 is a perspective view illustrating an appearance of the accounting apparatus 103. The accounting apparatus 103 according to the present embodiment includes compositions for functioning as a self-checkout Point Of Sales terminal (hereinafter referred to as a self-POS terminal) on which the customer C can perform the sales registration processing and the settlement at a standby state.

The accounting apparatus 103 includes a first case body 10 and a second case body 11. The first case body 10 includes a change machine 4 and a scanner 5. The second case body 11 is placed on an upper surface 10a of the first case body 10 and includes a display operation panel 6, a printer 9, and a card reader 8.

The scanner 5 has the same structure as the scanner 111. The scanner 5 reads a code symbol such as a barcode held in front of an image capturing window provided at the upper part of the first case body 10. An image capturing unit outputs a commodity code acquired by decoding the read code symbol to a control unit 150 (see FIG. 4). The scanner 5 reads a transaction number for specifying a transaction from a barcode printed on a slip issued by the registration apparatus 102.

The display operation panel 6 is placed on the second case body 11 and includes a display 61 and a touch panel 62. The display 61 is composed of a liquid crystal panel, for example, to display images and information. The touch panel 62 is provided on the surface of the display 61 to output information based on a position touched by the customer C to a control unit 50 (see FIG. 4).

The card reader 8 is arranged next to the second case body 11 at the left side and on the upper surface 10a of the first case body 10. The card reader 8 reads and writes information on a credit card or the like inserted from a card insertion slot 8a.

The change machine 4 includes a coin inserting slot 46, a bill inserting slit 41, a bill dispensing slit 42, and a coin dispensing unit 43. The change machine 4 accommodates bills input through the bill inserting slit 41 in a bill accommodation unit (not illustrated). The change machine 4 accommodates coins input through the coin inserting slot 46 in a coin accommodation unit (not illustrated). Then, the change machine 4 dispenses a change of bill to the bill dispensing slit 42 in response to a request for dispensing a change from the control unit 50. The change machine 4 dispenses a change of coin to the coin dispensing unit 43 in response to a request for dispensing a change from the control unit 50. If a change amount is 1300 yen, for example, the change machine 4 dispenses one 1000 yen bill to the bill dispensing slit 42 and dispenses an amount of coins equivalent to 300 yen to the coin dispensing unit 43.

The printer 9 includes a printing unit (not illustrated) built in the second case body 11 and a receipt issuing slit 9a provided in a front surface 11a of the second case body 11. The printer 9 issues a receipt on which transaction information is printed from the receipt issuing slit 9a in response to the control performed by the control unit 50.

The accounting apparatus 103 includes a columnar display pole 22 provided such that it stands behind the upper surface 10a of the first case body 10. The display pole 22 includes a light emitting unit 22a, which selectively emits blue light and red light, at a tip thereof. The light emitting unit 22a displays a current operation state of the accounting apparatus 103. If the processing unit of the accounting apparatus 103 is in a normal state, the light emitting unit 22a emits a blue light indicating that the accounting apparatus 103 is in the normal state. There is also a state in which the processing unit is not yet in an error state but is in an almost error state or becomes in an error state soon (a state where a rolled receipt sheet accommodated in the printer 9 is consumed soon, or a state where coins and bills accommodated in the change machine 4 are short and less than least accommodation amounts required as change, for example, (these states is collectively referred to as a "caution state")) in the accounting apparatus 103. If the processing unit is in such a caution state, the light emitting unit 22a emits the same blue light as in the aforementioned normal state. The processing unit described above is referred to a configuration involved in the accounting processing in the accounting apparatus 103, and includes the change machine 4, the scanner 5, the card reader 8, and the printer 9, for example. The caution state is also referred to as a near-error state.

In contrast, if the processing unit of the accounting apparatus 103 is in the error state, the light emitting unit 22a emits a red light indicating that the accounting apparatus 103 is in the error state. Since the display pole 22 includes the light emitting unit 22a at the tip of the display pole 22, the operator O can confirm the color of light emitted by the light emitting unit 22a from a far place.

The display pole 22 includes an information display unit 70 provided immediately below the light emitting unit 22a (at the upper part of the display pole 22). The information display unit 70 is composed of a liquid crystal panel, for example, to display images and information. The information display unit 70 is fixedly installed such that a display screen thereof is directed in the same direction as the display 61.

Since the customer C operates such an accounting apparatus 103 as described above, if the customer C deposits cash for accounting, the accounting apparatus 103 executes the accounting processing with cash based on the commodity information received from the registration apparatus 102. The accounting processing is referred to as processing of displaying a total amount relating to the transaction based on the commodity information acquired from the sales registration processing, accounting based on cash received from the customer C, and issuing a receipt. One transaction includes the sales registration processing and the accounting processing. Transaction processing includes the sales registration processing and the accounting processing. Transaction information includes the commodity information and the accounting information.

If the customer C carries out a settlement with a credit card for accounting by the accounting apparatus 103, the accounting apparatus 103 executes the accounting processing with the credit card based on the transaction information. The accounting apparatus 103 issues a receipt on which the accounting information obtained from the result of the accounting processing and the commodity information received from the registration apparatus 102 (transaction information) are printed, from the issuing slit 9a of the printer 9.

In such a checkout system 101, the registration apparatus 102 reads the commodity information of commodity based on a read commodity code to execute the sales registration processing. Then, the registration apparatus 102 transmits the commodity information to the accounting apparatus 103 and issues a slip on which a barcode including a transaction number for specifying the transaction is printed. The customer C uses the scanner 5 of the accounting apparatus 103 to read the barcode printed on the issued slip, and then the accounting apparatus 103 specifies the transaction based on the transaction number to execute the accounting processing relating to the specified transaction.

Next, hardware configurations of the registration apparatus 102 and the accounting apparatus 103 are described. FIG. 4 is a block diagram illustrating hardware configurations of the registration apparatus 102 and the accounting apparatus 103.

As illustrated in FIG. 4, the registration apparatus 102 includes the control unit 150. The control unit 150 is constituted with a Central Processing Unit (CPU) that executes a control processing, a Read Only Memory (ROM) and a Random Access Memory (RAM) acting as a storage section (none of these components are illustrated), and the like. The ROM stores various programs executed by the CPU and various kinds of data. The RAM temporarily stores data and programs when the CPU executes various programs. The RAM stores various kinds of screen display data to be displayed on the display 114.

The control unit 150 is connected to the scanner 111 and the touch panel 113 via an input/output device control unit 139 and a bus 138. The control unit 150 is further connected to the display 114 and the operation unit 115 such as a keyboard via the input/output device control unit 139 and the bus 138. The control unit 150 is also connected to the printer 116, the display for customer 117, the card reader 118, and a Hard Disk Drive (HDD) 136 via the input/output device control unit 139 and the bus 138.

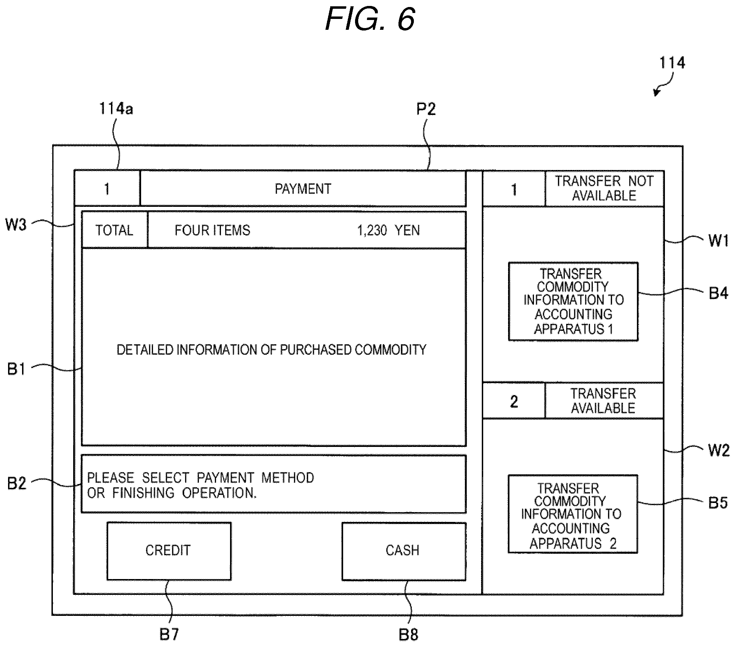

The operation unit 115 includes a subtotal key 1 for declaring completion of inputs of commodity codes in the transaction. The touch panel 113 includes a transfer destination key B4 and a transfer destination key B5 (see FIG. 6) for designating a transfer destination of transaction data, which correspond to display indicating transfer destinations on the display 114.

The HDD 136 stores a program 137 executed by the CPU of the control unit 150 and includes the PLU file F1 and the commodity information section F2. The PLU file F1 stores commodity codes uniquely assigned to the respective commodity and commodity information relating to each commodity, such as a name, a price, and a commodity classification in association with commodity codes, respectively. In a case of specifying commodity by general object recognition, the PLU file F1 also stores feature amounts such as a hue and a surface roughness read from commodity images. The commodity information section F2 stores, by commodity code, the commodity information read from the PLU file F1 in accordance with the commodity code read by the scanner 111.

The program 137 that is executed by the CPU of the control unit 150 of the registration apparatus 102 is provided by being recorded in a computer-readable recording medium such as a CD-ROM, a flexible disk (FD), a CD-R, or a Digital Versatile Disk (DVD) in an installable or executable format file.

The program 137 may be provided by being stored on a computer connected to a network such as the Internet and being downloaded via the network. The program 137 may also be provided or distributed via a network such as the Internet.

The control unit 150 mutually communicates with a store server (not illustrated) and the accounting apparatus 103 connected by a network NT via a communication interface 140.

The store server performs an overall management of the sales registration processing performed by one or more registration apparatuses 102 installed in the store and accounting processing performed by the accounting apparatus 103.

As shown in IFG. 4, the accounting apparatus 103 includes a control unit 50 with a computer configuration including a CPU and a ROM and a RAM (none of these components are illustrated) acting as a storage section. The ROM stores various programs executed by the CPU and various kinds of data. The RAM temporarily stores data and programs when the CPU executes various programs, and stores sales data showing commodity sales records and various kinds of screen display data to be displayed on the display 61.

The control unit 50 is connected to the touch panel 62, the display 61, the scanner 5, the card reader 8, the printer 9, the change machine 4, the light emitting unit 22a, and the information display unit 70 via an input/output device control unit 39 and a bus 38.

The card reader 8 reads information of a credit card of the customer C inserted through a card insertion slot. The printer 9 prints a receipt to issue the receipt from the receipt issuing slit 9a after the account processing is completed. The change machine 4 performs a depositing processing of bills and coins input to the bill inserting slit 41 and the coin inserting slot 46. The change machine 4 dispenses a change to be paid to the customer C in response to a request from the control unit 50.

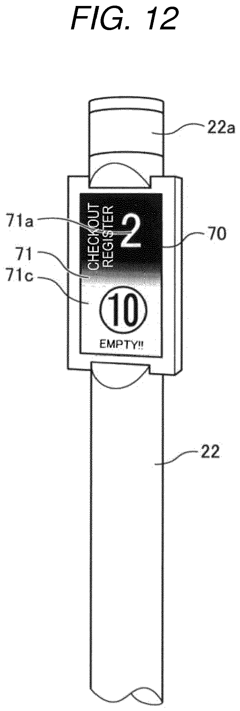

The HDD 36 is provided with a commodity information section F4 for storing a program 37 executed by the control unit 50 and a commodity information received from the registration apparatus 102 and an error information section F5 for storing content of errors by an error category to be displayed on the information display unit 70 so that the content of the error is visually confirmed. Specifically, the error information section F5 stores a display information, e.g., an icon, for indicating the content of error so that the content of each error by the error category can be recognized at first sight. In the change machine 4, in a case of error content in which a shortage of a 10 yen coin to be dispensed as a change occurs, the error information section F5 stores information (see FIG. 12) for displaying an error information 71c indicating an image modeled in a shape of a 10 yen coin on a red color background on the information display unit 70 so that an operator can recognize the error at first sight. Further, in the printer 9, if a shortage of a receipt sheet occurs, the error information unit F5 stores information for displaying error information 71c in which an image of a rolled receipt sheet is indicated on a red color background on the information display unit 70.

The program 37 executed by the CPU of the control unit 50 of the accounting apparatus 103 is provided by being recorded in a computer-readable recording medium such as a CD-ROM, a flexible disk (FD), a CD-R, or a Digital Versatile Disk (DVD) in an installable or executable format file.

The program 37 may be provided by being stored on a computer connected to a network such as the Internet and being downloaded via the network. The program 37 may also be provided or distributed via a network such as the Internet.

The control unit 50 mutually communicates with the store server (not illustrated) and the registration apparatus 102 connected by the network NT such as a LAN via the communication interface 40.

Hereinafter, a control processing performed by the registration apparatus 102 and the accounting apparatus 103 in the checkout system 101 according to the first embodiment is described.

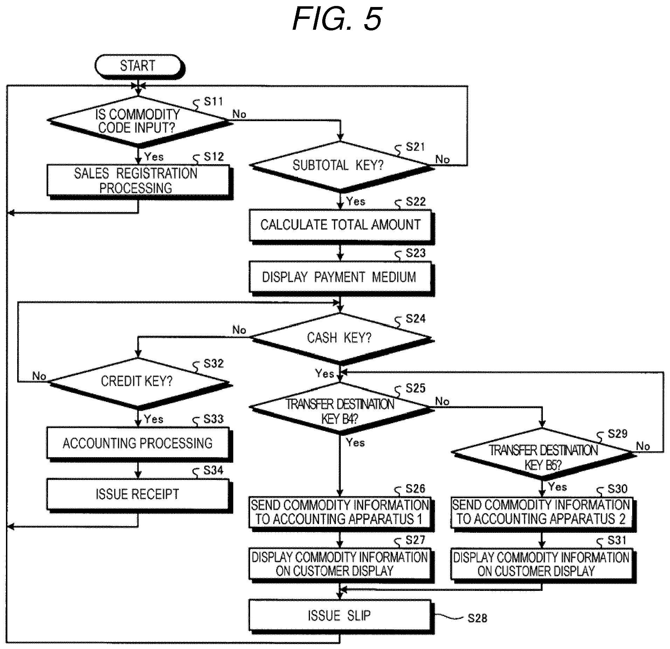

First, a control processing executed by the control unit 150 of the registration apparatus 102 according to the program 137 is described with reference to FIGS. 5 to 7. FIG. 5 is a flowchart illustrating a flow of the control processing in the registration apparatus 102.

As illustrated in FIG. 5, the control unit 150 of the registration apparatus 102 determines whether or not the scanner 111 reads a commodity code serving as a specifying information for specifying a commodity (Act S11). If it is determined that the commodity code is read (Yes in Act S11), the control unit 150 reads commodity information of the corresponding commodity from the PLU file F1 based on the read commodity code and executes sales registration processing on the commodity to store the commodity information in the commodity information section F2 (Act S12). The control unit 150 then returns to the processing in Act S 11.

On the other hand, if it is determined that the commodity code is not read (No in Act S11), the control unit 150 determines whether the subtotal key 1151 is operated (Act S21). If it is determined that the subtotal key 1151 is operated (Yes in Act S21), the control unit 150 calculates a total amount the registered commodities based on the commodity information of the commodities on which the sales registration processing is executed in Act S12 (Act S22).

Next, the control unit 150 displays a selection screen P2 on which media usable for payment of the transaction on the display 114 (Act S23). In the present embodiment, a cash key B8 for payment with cash and a credit key for payment with credit card are displayed as the media usable for payment.

FIG. 6 is a diagram illustrating an example of the selection screen P2 displayed by the control unit 150 in Act S23. As illustrated in FIG. 6, the control unit 150 of the registration apparatus 102 displays the payment amount display window W3, a first transfer destination display window W1, and a second transfer destination display window W2 on the selection screen P2. The payment amount display window W3 is provided near the left end part, occupies a half or more of the width of the display 114, and has a height adjacent to the upper and lower sides in the display 114. The two windows, i.e., the first transfer destination display window W1 and the second transfer destination display window W2, are provided between the right end side of the display 114 and the right end side of the payment amount display window W3 such that they are adjacent to each other in the vertical direction.

The payment amount display window W3 displays the total amount B6 calculated in Act S22, the total number of commodities and the commodity information B1 of the purchased commodity. The payment amount display window W3 also displays a message B2 for prompting the customer C to select a payment medium. The payment amount display window W3 displays a cash key B8 for selecting cash and a credit key B7 for selecting a credit card as keys for selecting a payment medium.

In contrast, the first transfer destination display window W1 and the second transfer destination display window W2 display a transfer availability information indicating as a candidate of the transfer destination at the time of the display whether each accounting apparatus 103 is in a transfer available state (standby state) or an unavailable state (operating state), to which an identification number of each accounting apparatus 103 is added. The first transfer destination display window W1 and the second transfer destination display window W2 also display a transfer destination key B4 and a transfer destination key B5 for declaring transfer. The transfer destination key B4 is a declaration key for transmitting a transaction information such as a commodity information, a total amount, and a point (number of acquired points) to the accounting apparatus 1. The transfer destination key B5 is a declaration key for transmitting the transaction information to the accounting apparatus 2.

A designation method of selecting the accounting apparatus 103 serving as a transfer destination is not limited to the operation of the transfer destination key B4 and the transfer destination key B5. For example, the accounting apparatus 103 serving as a transfer destination may be selected by operating in combination a numeric key and a send key provided on the operation unit 115. Specifically, the accounting apparatus 103 associated with the first transfer destination window W1 may be selected by operating the numeric key "1" and the send key in combination.

In a case of sending transaction data to the accounting apparatus 103, such as the accounting apparatus 3 or the accounting apparatus 4, which are not displayed on the selection screen P2, for example, the accounting apparatus 103 is specified with the numeric key (3 or 4), and the send key is then operated. It is possible to arbitrarily designate the identification number of the accounting apparatus 103 serving as the transfer destination by operating the numeric key and the send key provided on the operation unit 115 in combination as described above.

Return to FIG. 5. Next, the control unit 150 determines whether or not the cash key B8 is operated (Act S24). If it is determined that the cash key B8 is operated (Yes in Act S24), then the control unit 150 determines whether or not the transfer destination key B4 is operated (Act S25). If it is determined that the transfer destination key B4 is operated (Yes in Act S25), the control unit 150 sends the commodity information stored in the commodity information section F2 in Act S12 and the transaction information such as the total amount information calculated in Act S22 to the accounting apparatus 1 (Act S26). Then, the control unit 150 displays, on the display for customer 117, a message for guiding the customer C to perform the accounting processing on the accounting apparatus 1 (Act S27).

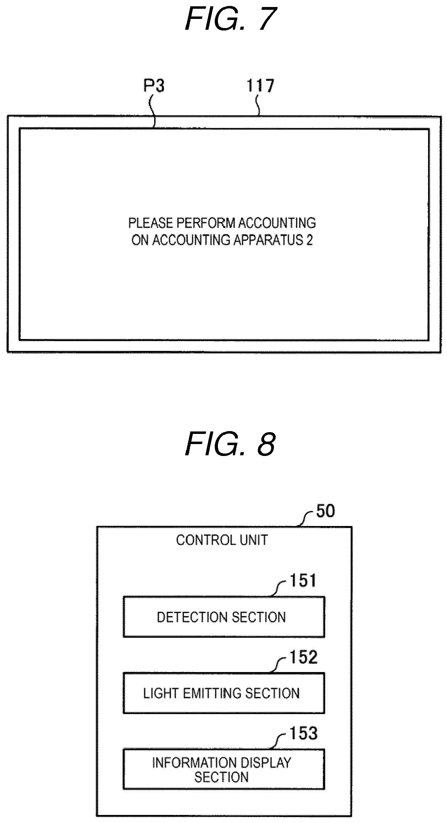

FIG. 7 is a diagram illustrating an example of a customer screen P3 of the registration apparatus 102 displayed in Act S27. As illustrated in FIG. 7, the control unit 150 displays, on the display for customer 117, a message of guiding the customer C to the accounting apparatus 2 to perform the accounting processing on the accounting apparatus 2. For example, the message "Please perform accounting processing on the accounting apparatus 2" is displayed. Next, the control unit 150 issues a slip on which a barcode of a symbolized transaction number for specifying the transaction is printed by the printer 116 (Act S28). The operator O hands over the issued slip to the customer C. Then, the control unit 150 returns to the processing in Act S11. The customer C holds the received slip and goes to the accounting apparatus 103 with the number displayed on the display for customer 117.

On the other hand, if it is determined that no transfer destination key B4 is operated (No in Act S25), then the control unit 150 determines whether or not the transfer destination key B5 is operated (Act S29). If it is determined that the transfer destination key B5 is operated (Yes in Act S29), the control unit 150 sends the commodity information stored in the commodity information section F2 in Act S12 and the transaction information such as total amount information calculated in Act S22 to the accounting apparatus 2 (Act S30). The control unit 150 displays, on the customer display 117, a message for guiding the customer C to perform accounting processing on the accounting apparatus 2 to the customer C (Act S31). Then, the control unit 150 executes the processing in Act S28. Then, the control unit 150 returns to the processing in Act S 11. If it is determined that the transfer destination key B5 is not operated (No in Act S29), the control unit 150 returns to the processing in Act S25.

If it is determined in Act24 that the cash key B8 is not operated (No in Act S24), the control unit 150 determines whether or not the credit key B7 is operated (Act S32). If it is determined that the credit key B7 is operated (Yes in Act S32), the control unit 150 executes the accounting processing based on the commodity information on which the sales registration processing is executed in Act S12 and the accounting information such as total amount information calculated in Act S22 (Act S33). Then, the control unit 150 issues a receipt on which the commodity information and the accounting information are printed by the printer 116 (Act S34). Then, the control unit 150 returns to the processing in Act S11.

If the customer C uses a credit card, no money is given and received by the customer C. Therefore, the sales registration processing and the accounting processing are executed by the operator O on the registration apparatus 102. In such a case, the registration apparatus 102 does not display the message for executing the accounting processing on the accounting apparatus 103 to the customer C. Therefore, the customer C does not go to the accounting apparatus 103, and the accounting operation by the customer C himself or herself on the accounting apparatus 103 is omitted.

If it is determined that the credit key B7 is not operated (No in Act S32), the control unit 150 returns to the processing in Act24. If it is determined that the subtotal key 1151 is not operated (No in Act S21), the control unit 150 returns to the processing in Act11.

Hereinafter, the control of the accounting apparatus 103 is described in detail with reference to FIGS. 8 to 11. FIG. 8 is a functional block diagram illustrating a functional configuration of the accounting apparatus 103. The control unit 50 functions as a detection section 151, a light emitting section 152, a specifying section 153, and an information display section 154 in accordance with the program 37 stored in the ROM or the HDD 36.

The detection section 151 has a function of detecting an error state of the processing unit.

The light emitting section 152 has a function of controlling the light emitting unit 22a to emit a red light indicating the error state on the condition that the detection section 151 detects the error state of the processing unit.

The information display section 153 has a function of displaying content of the error, detected by the detection section 151, which can be visually recognized, on the information display unit 70.

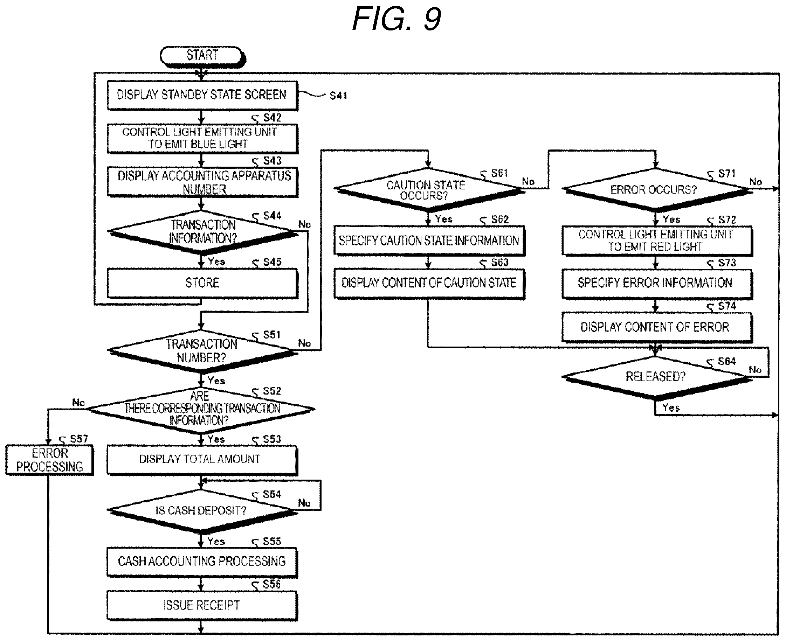

Next, the control processing of the accounting apparatus 103 is described. The customer C executes the accounting operation on the accounting apparatus 103 designated by the guide message displayed on the display for customer 117 of the registration apparatus 102 in Act S27 or Act S31. FIG. 9 is a flowchart illustrating a flow of the control processing of the accounting apparatus 103. In FIG. 9, the control unit 50 displays a standby state screen while no processing is performed (Act S41). Then, the control unit 50 controls the light emitting unit 22a to emit a blue light in this state (Act S42). The control unit 50 displays an accounting apparatus number for specifying the accounting apparatus in the standby state on the information display unit 70 (Act S43).

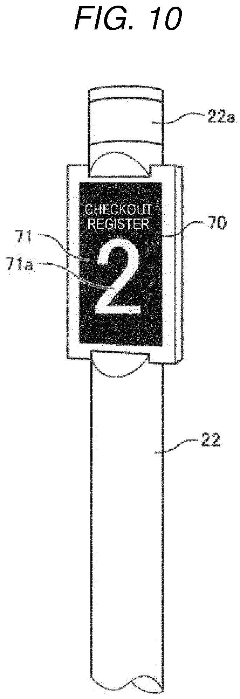

FIG. 10 illustrates a light emitting state of the light emitting unit 22a and a display state of the information display unit 70 in Act S42. In FIG. 10, the light emitting unit 22a emits a blue light. The display section 71 of the information display unit 70 displays the accounting apparatus number 71 a (accounting apparatus number "2" in the example illustrated in FIG. 10). The background color of the accounting apparatus number is black.

Return to FIG. 9. Subsequently, the control unit 50 determines whether or not the transaction information is received from the registration apparatus 102 (Act S44). If it is determined that the transaction information is received (Yes in Act S44), the control unit 50 stores the accounting information along with the received transaction number for specifying the transaction in the commodity information section F4 (Act S45). Then, the control unit 50 returns to the processing in Act S41.

On the other hand, if it is determined that the transaction information is not received from the registration apparatus 102 (No in Act S44), the control unit 50 determines whether or not the transaction number is input by reading the barcode printed on the slip issued in Act S28 through the scanner 5 (Act S51). If it is determined that the transaction number is input (Yes in Act S51), the control unit 50 determines whether or not the transaction number is stored in the commodity information section F4 (Act S52). If it is determined that the transaction number is stored (Yes in Act S52), the control unit 50 displays a total amount of the transaction on the display 61 based on the transaction information specified by the transaction number (Act S53).

Next, the control unit 50 determines whether or not cash equal to or greater than the displayed total amount is put in (Act S54). The control unit 50 waits for until the cash is put in (No in Act54), and if it is determined that the cash is put in (Yes in Act S54), the control unit 50 executes the accounting processing with cash based on the received transaction information (Act S55). Then, the control unit 50 issues a receipt on which the commodity information and the accounting information of the commodity on which the accounting processing is executed are printed (Act S56).

If it is determined in Act S52 that the transaction number is not stored in the commodity information section F4 (No in Act S52), the control unit 50 executes an error processing (Act S57). The light emitting unit 22a emits no light in the error processing in this case. In addition, the error information is not displayed on the information display unit 70.

On the other hand, if it is determined in Act S51 that the transaction number is not input (No in ActS51), then the control unit 50 determines whether or not a caution state occurs in each processing unit (Act S61). If it is determined that the caution state occurs (Yes in Act S61), the control unit 50 determines which of the processing units the caution state occurs (Act S62) to specify the processing unit which in the caution state. The caution state is specified based on an output from a sensor provided in the processing unit, for example. If a sensor provided at a 10 yen coin accommodation unit of the change machine 4 provides an output indicating that 10 yen coins are short as compared with a predetermined amount, for example, the control unit 50 specifies the caution state that 10 yen coins are short. If a sensor provided in the printer 9 provides an output indicating that the remaining amount of the accommodated rolled receipt sheet becomes little, the control unit 50 specifies that the printer 9 is in the caution state.

Then, the control unit 50 reads a display information indicating content of the specified caution state from the error information section F5 to display the display information as a shortage information on the information display unit 70 (Act S63). The operator O can determine which one is in the caution state and how the caution state is by viewing the shortage information displayed on the information display unit 70. In such a case, the light emitting unit 22a is still in the state of emitting blue light.

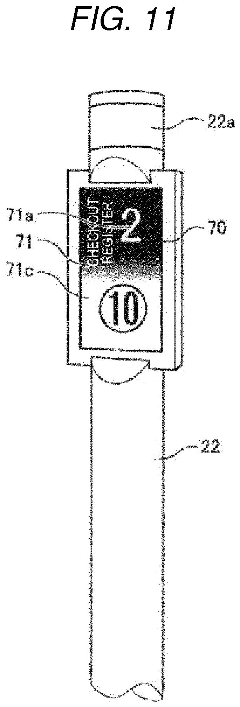

FIG. 11 illustrates an example of a display state of the information display unit 70 that displays the caution state in Act S63. In FIG. 11, the light emitting unit 22a is in the state of emitting a blue light. The information display unit 70 also displays the accounting apparatus number 71a on an upper half thereof. The background color of the accounting apparatus number 71 a (background color of the upper half of the information display unit 70) is black. The information display unit 70 displays the shortage information 71b read from the error information section F5 in the lower half thereof. The background color of the shortage information 71b (background color of the lower half of the information display unit 70) is yellow. In the example illustrated in FIG. 11, the shortage information 71b indicating the state in which 10 yen coins are short as compared with the predetermined amount is displayed.

Since the background color of the accounting apparatus number 71 a and the shortage information 71b displayed on the information display unit 70 is yellow and a 10 yen coin is displayed as the shortage information 71b, the operator O can visually determine the caution state in which the 10 yen coins to be paid as change are short as compared with the predetermined amount in the change machine 4 of the accounting apparatus 103 with the accounting apparatus number 71a of "2".

The operator O goes to the accounting apparatus 103 in the caution state to release the caution state. The control unit 50 determines whether or not the caution state is released (Act S64). The control unit waits for until the release is carried out (No in Act S64), and if it is determined that the caution state is released (Yes in Act S64), the control unit 50 returns to the processing in Act S41.

On the other hand, if it is determined in Act S61 that no caution state occurs in each processing unit (No in Act S61), then the control unit 50 (detection section 151) determines whether or not an error state occurs in each processing unit (Act S71). If it is determined that the error state occurs (Yes in Act S71), the control unit 50 (light emitting section 152) controls the light emitting unit 22a to emit red light (Act S72). Then, the control unit 50 determines which of the processing unit the error state occurs to specify the processing unit which is in the error state (Act S73).

The error state is determined based on an output from a sensor provided at each processing unit in the same manner as in the determination of the caution state. If the sensor provided in the 10 yen coin accommodation unit of the change machine 4 provides an output indicating the shortage of 10 yen coin, the control unit 50 specifies the error state in which no 10 yen coin is in the accommodation unit. If the sensor of the printer 9 provides an output indicating that all the rolled receipt sheet accommodated is consumed, the control unit 50 determines that the printer 9 is in the error state.

Next, the control unit 50 (information display section 153) reads a display information indicating the content of the specified error from the error information section F5 to display the display information as an error information on the information display unit 70 (Act S74). Then, the control unit 50 executes the processing in Act S64.

The operator O can determine the content of the error state by viewing the error information displayed on the information display unit 70. FIG. 12 illustrates an example of the display state of the information display unit 70 that displays the error state in Act S73. In FIG. 12, the light emitting unit 22a is in a state of emitting red light. The information display unit 70 displays the accounting apparatus number 71a on the upper half thereof. The background color of the accounting apparatus number 71 a (background color of the upper half of the information display unit 70) is black. The information display unit 70 displays an error information 71c read from the error information section F5 in the lower half thereof. The background color of the error information 71c (background color of the lower half of the information display unit 70) is red. In the example illustrated in FIG. 12, the error information 71c indicating the state in which the shortage of 10 yen coins occurs is displayed. The error information 71c may be constantly displayed on the information display unit 70, or display and non-display states (blinking) may be repeated.

Since the light emitting unit 22a emits red light, the operator O can recognize from a location at a far distance that the accounting apparatus 103 is in the error state. Therefore, the operator O can immediately rush to the accounting apparatus 103. Since the background color of the accounting apparatus number 71a and the error information 71c displayed on the information display unit 70 is red and a 10 yen coin is displayed as the error information 71 c, the operator O visually determine the error state in which there are no 10 yen coins to be paid as change in the change machine 4 of the accounting apparatus 103 with the accounting apparatus number 71a of "2".

According to the first embodiment as described above, the accounting apparatus 103 displays the caution state or the error information on the information display unit 70. Therefore, the operator O can recognize the content of the caution state or the content of the error that occurs in the accounting apparatus 103 without releasing the caution state or the error state in the accounting apparatus 103.

In the first embodiment, if the error state occurs, the control unit 50 controls the light emitting unit 22a to emit red light, and in conjunction with the light emission, the control unit 50 controls the information display unit 70 to display the error information 71c. Although the light emitting unit 22a emits strong red light, the light of the display of the error information 71c on the information display unit 70 is not as strong as the light emitted from the light emitting unit 22a. However, the conjunction of the light emission from the light emitting unit 22a and the display on the information display unit 70 as described above allows the operator O to recognize the error state first from a remote location by the strong light from the light emitting unit 22a and then, the operator O can approach the accounting apparatus 103 to some extent, and view the display of the error information 71c on the information display unit 70 to recognize the content of the error.

### (Second Embodiment)

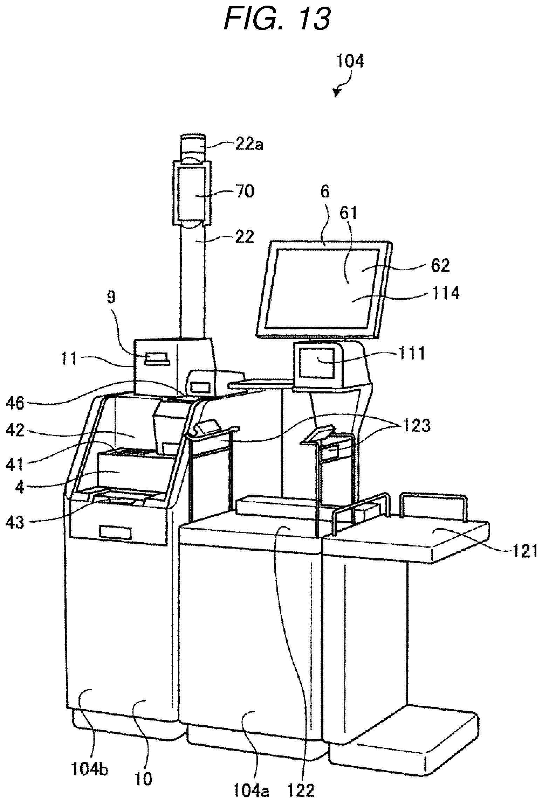

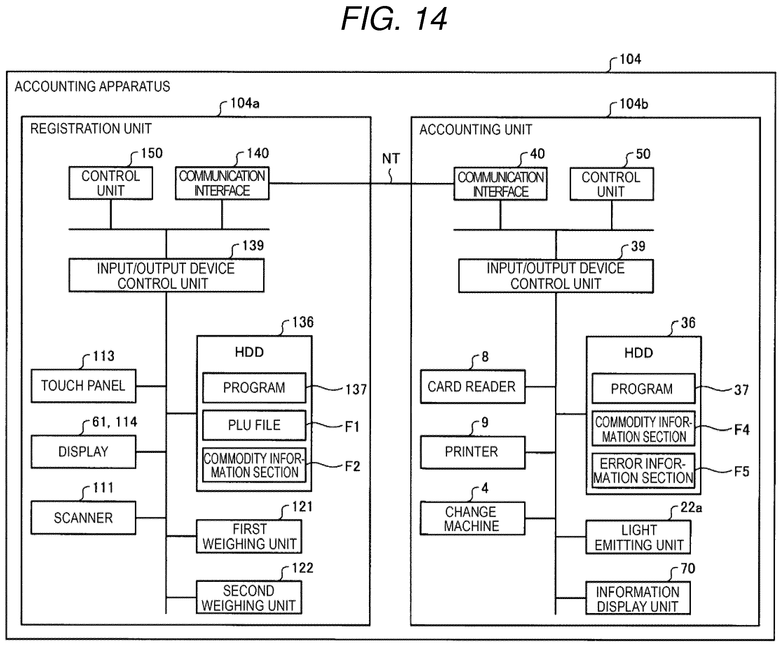

Hereinafter, a second embodiment is described with reference to FIGS. 13 and 14. An accounting apparatus 104 according to the second embodiment has both the functions of the registration apparatus 102 and the accounting apparatus 103 described in the first embodiment. A customer C himself or herself performs both a registration operation and an accounting operation, using the accounting apparatus 104. Hereinafter, the accounting apparatus 104 is described. In the following description, the same reference numerals are applied to the same configurations and controls as in the first embodiment, and therefore, the descriptions thereof are simplified or omitted.

FIG. 13 is a perspective view illustrating an appearance of the accounting apparatus 104. The accounting apparatus 104 includes a registration section 104a and an accounting section 104b. The registration section 104a and the accounting section 104b are formed in separate case bodies. A display 114 provided in the registration section 104a also functions as the display 61.

The registration section 104a includes a first weighing unit 121 and a second weighing unit 122. The registration section 104a includes locking units 123, on which handles of a shopping bag for putting commodity therein are hooked, at both sides of the second weighing unit 122. A basket (not illustrated) into which a commodity purchased in the store is put is placed on the first weighing unit 121. The shopping bag hooked on the locking unit 123 is set at the second weighing unit 122. In this state, the first weighing unit 121 weighs the total weight of the basket and the commodity in the basket.

The customer C takes out the commodity from the basket placed on the first weighing unit 121. At the time of the operation, the total weight weighed by the first weighing unit 121 decreases by a weight of the commodity taken out from the basket. Next, the customer C passes the barcode attached to the commodity taken out in front of the scanner 111 to read the barcode with the scanner 111. Then, the customer C puts the commodity of which the barcode thereon is read in the shopping bag set at the second weighing unit 122. Then, the weight weighed by the second weighing unit 122 increases by the weight of the commodity put in the shopping bag.

In such an operation by the customer C as described above, if the change in the weight weighed by the first weighing unit 121 is equal to the change in the weight weighed by the second weighing unit 122, the registration section 104a executes the sales registration processing for the commodity. On the other hand, if the change in the weight weighed by the first weighing unit 121 is different from the change in weight weighed by the second weighing unit 122, the registration section 104a becomes an error state and thus does not execute the sales registration processing for the commodity. The first weighing unit 121 and the second weighing unit 122 according to the second embodiment correspond to a processing unit.

FIG. 14 is a block diagram illustrating hardware configurations of the registration section 104a and the accounting section 104b according to the second embodiment. In FIG. 14, the accounting apparatus 104 includes the registration section 104a and the accounting section 104b. The registration section 104a and the accounting section 104b are connected to each other by a network NT. The registration section 104a includes the first weighing unit 121 and the second weighing unit 122.

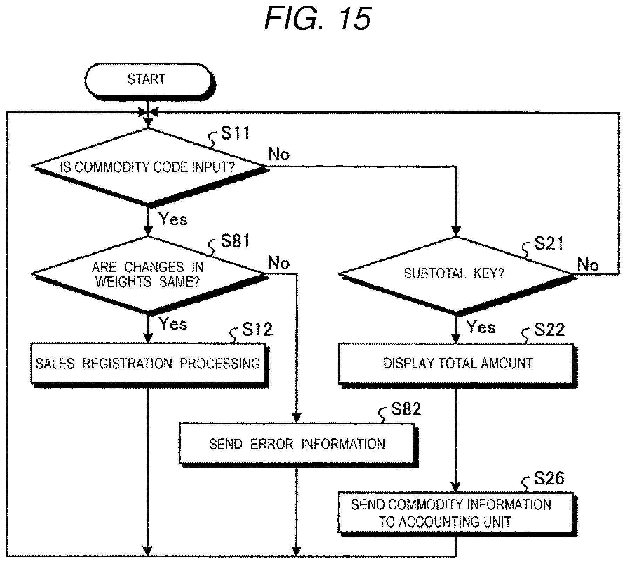

FIG. 15 is a flowchart illustrating a flow of the control processing of the registration section 104a according to the second embodiment. In Fig. 14, if it is determined that a commodity code is input (Yes in Act S11), the control unit 150 determines whether or not a decrease in a weight weighed by the first weighing unit 121 is equal to an increase in a weight weighed by the second weighing unit 122 (Act S81). If it is determined that the decrease in the weight is equal to the increase in the weight (Yes in Act S81), the control unit 150 executes the processing in Act S 12. If it is determined that the decrease in the weight is not equal to the increase in the weight (No in Act S81), the control unit 150 sends a weight error information to the accounting section 104b (Act S82).

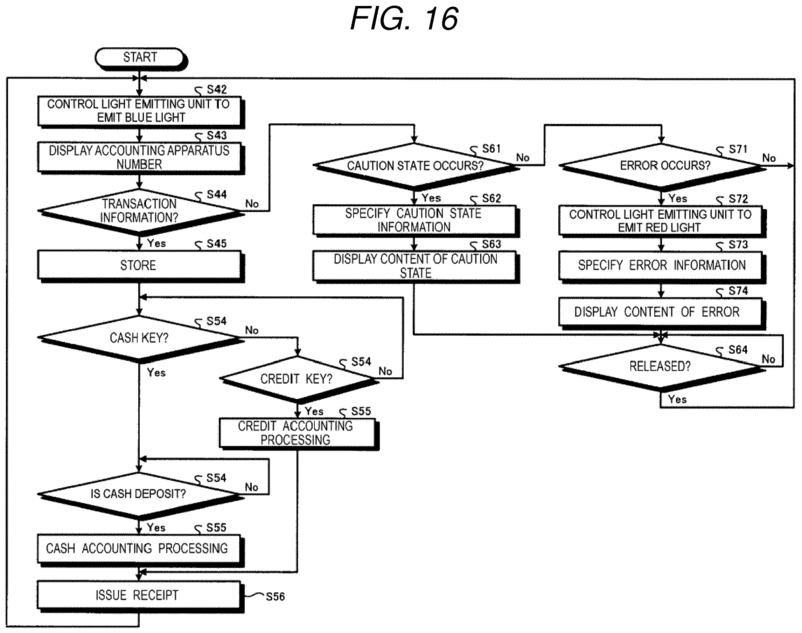

FIG. 16 is a flowchart illustrating a flow of the control processing of the accounting section 104b according to the second embodiment. In FIG. 16, if the transaction information is received from the registration section 104a (Yes in Act S44), the control unit 50 stores the transaction information (Act S45). Then, it is determined whether the cash key is operated (Act S83) or whether the credit key is operated (Act S84). The control unit 50 waits for until one of the keys described above is operated (No in Act S83 and No in Act S84), and if it is determined that one of the keys is operated (Yes in Act S83 or Yes in Act S84), the control unit 50 executes the accounting processing in accordance with the operated key. For example, if it is determined that the credit key is operated (Yes in Act S84), the control unit 50 performs the accounting processing with a credit card inserted (Act S85).

If the error information sent from the registration section 104a in the processing in Act S82 is received (Yes in Act S71), the control unit 50 executes the processing in Act S72 and subsequent processing. In such a case, the information display unit 70 displays an error information 71c indicating that the change in the weight weighed by the first weighing unit 121 does not coincide with the change in the weight weighed by the second weighing unit 122.

According to the second embodiment as described above, the accounting apparatus 104 displays the caution state or the error information on the information display unit 70. Therefore, the operator O can recognize the content of the caution state or the content of the error occurring in the accounting apparatus 104 before releasing the caution state or the error state of the accounting apparatus 104.

Although some exemplary embodiments are described above, these embodiments are presented for the illustrative purpose and are not intended to limit the scope of the invention. These novel embodiments can be performed in other various forms, and various omissions, replacements, and changes can be made without departing from the gist of the invention. These embodiments and modifications thereof are included in the scope and the gist of the invention, and are also included in the invention described in the claims and equivalents thereof.

For example, in the second embodiment, the accounting apparatus 104 includes the registration section 104a and the accounting section 104b formed in separate case bodies. However, the embodiment is not limited thereto. The accounting apparatus 104 may include the registration section 104a and the accounting section 104b that are provided in a single case body.

In the second embodiment, the registration section 104a and the accounting section 104b in the accounting apparatus 104 include the control unit 150 and the control unit 50 respectively to individually control corresponding sections. However, the embodiment is not limited thereto. The accounting apparatus 104 may be configured such that a single control unit controls the registration section 104a and the accounting section 104b.

In the first and second embodiments, the information display unit 70 is arranged in a fixed manner. However, the embodiments are not limited thereto. The information display unit 70 may be configured to rotate around the columnar display pole 22. In such a case, the operator O can recognize the error information 71c displayed on the information display unit 70 at any place in the store.

Although Further in the first and second embodiments, two payment media or method, i.e., cash and credit card, are exemplified. However, the embodiments are not limited thereto. For example, other media such as gift ticket or gift certificate and electronic money can be used for payment.

In the first and second embodiments, a commodity is exemplified as a sales article. However, the embodiments may be applied to sales article (such as services) other than the commodity.

The program executed by the accounting apparatus 103 according to the embodiments are recorded and provided in a computer-readable recording medium such as a CD-ROM, a flexible disk (FD), a CD-R, or a Digital Versatile Disk (DVD) in an installable or executable format file.

The program executed by the accounting apparatus 103 according to the embodiments may be provided by being stored on a computer connected to a network such as the Internet and being downloaded via the network. The program executed by the accounting apparatus 103 according to the embodiments may be provided or distributed via a network such as the Internet.

The program executed by the accounting apparatus 103 according to the embodiments may be provided by being mounted on a ROM or the like in advance.

## Claims

1. An accounting apparatus comprising:
a case body provided with a processing section that executes an accounting processing based on a commodity information of a commodity, sales of which is registered by a registration section;
a light emitting unit provided above the case body;
an information display unit arranged in a connection manner with the light emitting unit;
a detection section configured to detect that the processing section is in an error state;
a light emitting section configured to control the light emitting unit to emit light in a form indicating the error state on a condition that the detection section detects that the processing unit is in the error state; and
an information display section configured to display content of the error detected by the detection section on the information display unit so that the content of the error is visually recognized.

2. The apparatus according to claim 1,
wherein the information display section displays a number for specifying the accounting apparatus in which the error occurs along with the content of the error on the information display unit.

3. The apparatus according to claim 1 or 2,
wherein the detection section further detects that the processing unit is in a caution state, and the information display section displays content of the caution state detected by the detection section on the information display unit so that the content of the caution state is visually recognized.

4. The apparatus according to any one of claims 1 to 3,
wherein the light emitting section controls the light emitting unit to emit light with a color indicating that the processing unit is in the error state, and the information display section displays the content of the error on a background a color of which is the same as that of the light emitted by the light emitting unit.

5. The apparatus according to any one of claims 1 to 4,
wherein the light emitting section controls the light emitting unit to emit light in a form different from that in the error state on a condition that the detection section detects the caution state.

6. A system for accounting processing, comprising:
a case body means provided with a processing means that executes an accounting processing based on a commodity information of a commodity, sales of which is registered by a registration means;
a light emitting means provided above the case body means ;
an information display means arranged in a connection manner with the light emitting unit;
a detection means configured to detect that the processing means is in an error state;
a light emitting means configured to control the light emitting means to emit light in a form indicating the error state on a condition that the detection means detects that the processing means is in the error state; and
an information display means configured to display content of the error detected by the detection means on the information display means so that the content of the error is visually recognized.

7. The system for accounting processing according to claim 6,
wherein the information display means displays a number for specifying the system for accounting in which the error occurs along with the content of the error on the information display means.

8. The system for accounting processing according to claim 6 or 7, wherein the detection means further detects that the processing means is in a caution state, and the information display means displays content of the caution state detected by the detection means on the information display means so that the content of the caution state is visually recognized.

9. The system for accounting processing according to any one of claims 6 to 8,
wherein the light emitting means controls the light emitting unit to emit light with a color indicating that the processing means is in the error state, and the information display means displays the content of the error on a background a color of which is the same as that of the light emitted by the light emitting unit.

10. The system for accounting processing according to any one of claims 6 to 9,
wherein the light emitting means controls the light emitting unit to emit light in a form different from that in the error state on a condition that the detection means detects the caution state.

11. A check-out system including at least one accounting apparatus according to any one of claims 1 to 5 or at least one system for accounting processing according to any one of claims 6 to 10, and a registration apparatus.
